(19) Europäisches Patentamt
European Patent Office
Office européen des brevets

(11) **EP 3 929 744 A1**

(12) **EUROPEAN PATENT APPLICATION**

(43) Date of publication:
**29.12.2021 Bulletin 2021/52**

(51) Int Cl.:
***G06F 9/50*** *(2006.01)*

(21) Application number: **20181682.4**

(22) Date of filing: **23.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Atos Global IT Solutions and Services Private Limited**
**400708 Maharashtra (IN)**

(72) Inventor: **NATARAJAN, Suryanarayanan**
**411057 Wakad, Pune (IN)**

(74) Representative: **Cabinet Camus Lebkiri**
**25 rue de Maubeuge**
**75009 Paris (FR)**

(54) **METHOD FOR PLACING A WORKLOAD IN A COMPUTING RESOURCE**

(57) Method (M) for placing a workload in a computing resource comprising the following steps:
• Receiving a workload (WL) from a user;
• Collecting data (CD) on the computing resource and the workload;
• Based on the collected data, computing potential workload placements (WPL);
• Based on the collected data and the computed potential workload placements, computing a set of utility functions for each potential workload placement (UF);
• Based on the computed set of utility functions, determine the workload placement fulfilling a utility criterium (PS);
• Placing the workload (WP) on the basis of the determined workload placement.

Figure 2

## Description

The present invention relates to the field of data centers and computing resources and in particular to the management of workloads in these systems.

More specifically, an object of the present invention is a method for placing a workload in a computing resource by accounting for both the provider and the user utility, the method being adapted also to place a workload in a heterogeneous computing resource.

## State of the art

Applications requiring high performance computing (HPC) are constantly increasing and more applications that require fully dedicated resources at scale and accelerators are moving towards cloud.

Traditional HPC in local systems is usually dominated by homogeneous infrastructure and common software stack. HPC users often overestimate their computing requirements and request for longer execution time to avoid having their job killed before its completion. According to the study "Job scheduling with adjusted runtime estimates on production supercomputers" published by W. Tang et al., in Journal of Parallel and Distributed Computing, vol. 73, 2013, user estimates are still highly inaccurate: half the jobs use less than 50% of their requested wall time and backfilling technique was used to improve the system utilization.

Such systems are highly customer-centric as the request comes from the customer and the resource manager blindly tries to accommodate the request in the best possible way to keep the user satisfied.

Current and future public clouds could complement super-computers in a cost-effective way by using business models such as cloud-burst and application aware mapping.

Nevertheless, deploying these applications in the cloud is challenging due to highly heterogeneous resources, such as different generation of processors and network, infrastructure, virtualization environments, and flexible pricing models.

HPC in cloud brings in the opportunity of pay-as-you-go model which has benefits like reduced Capital and Operational expense for the end user HPC community. HPC services in cloud will be offered as Infrastructure as a service (IaaS) or HPC as a Service (HPCaaS).

In either case, the two driving forces for data center resource management are the user and the provider. Examples of user expectations are to get good application performance and to have a good user experience without spending much time in the queue. Examples of provider expectations are to maximize his profit and lowering the total cost of ownership (TCO) of his resources and maintain a diversified user segmentation (user with different priorities and resource requirements). Lowering the TCO of a facility means for example reducing the amount of computing resource involved in the facility or reducing the power consumption of the facility.

Nevertheless, existing cloud datacenters like AWS®, Azure®, GCP® does not have a specialized orchestrator system that can handle HPC workloads. Hence, dedicated resource/cluster is offered to customer who will manage the entire administration. This puts extra pressure on the customer to hire experts to use the system.

Even if the person skilled in the art knows some methods to optimize workload placement, such as in the article "Optimizing load balancing and data-locality with data-aware scheduling" by K. Wang et al., published in 2014 IEEE International Conference on Big Data, these known methods are user-centric. Moreover, most of them focus on one parameter at time and are not adapted to deal with heterogeneous computing resources.

In other words, most of the traditional HPC Resource Manager lack the capability to make the workload placement decision taking into account Parallelism in the application, Heterogeneity in the cluster, Isolation required to achieve quality of service and Granularity of the requested service.

Moreover, most of the cloud orchestrators have intelligent resource manager and job scheduler but they can't work for the requirements of HPC as they are made for commercial/enterprise computing use which runs on commodity hardware and performance of the application is not the most important metric in the Service Level Agreement (SLA).

## Summary of the invention

To at least partially solve the aforementioned technical problems, the present invention addresses the issue of automating the workload placement in a computing resource by taking in account both user and provider-centric parameter, finding a trade-off between user and provider utility.

To this end, the invention relates to a method for placing a workload in a computing resource comprising the following steps:

- Receiving a workload from a user;

- Collecting data on the computing resource and the workload;

- Based on the collected data, computing potential workload placements;

- Based on the collected data and the computed potential workload placements, computing a set of utility functions for each potential workload placement;

- Based on the computed set of utility functions, determine the workload placement fulfilling a utility criterium;

- Placing the workload on the basis of the determined workload placement.

We mean by computing resource a computing unit such as a data center or a high-performance computing device. The computing resource can be remote or a cloud computing resource.

We mean by external workload an application or a computing task requested by a user. The external workload can be completely or partially parallelized, using several nodes in the computing resource. A node can be defined as the part of the computing resource where all the computing is performed.

The computing resource can be both homogeneous or heterogeneous. We mean by heterogeneous computing resource, a computing resource that is heterogeneous at the hardware level and/or at the software level. Heterogeneity at the hardware level means that the computing resource comprises different kinds of computing processor units (CPUs), for instance from different producers or having different cores and frequencies or belonging to different generations. Alternatively, the computing resource may comprise both CPUs and graphical processing units (GPUs) in the same cluster. Heterogeneity at the software levels means that the computing resource may comprise different software stacks running on homogeneous clusters. For example, the computing resource may comprise different operating systems (OS) loaded across the cluster or different versions of a library installed across a cluster.

We mean by data on the computing resource, data concerning the provider and/or the computing resources and/or the management of the computing resource.

Examples of data on the computing resources are number of nodes, number of cores, technical features of the cores, number of available cores. Other examples of data on the computing resource are user segmentation, accounting for user-dependent priorities, or total cost of ownership (TCO) of the computing resource. TCO comprises the amount of infrastructure needed to build the computing resource and/or the power consumption of the computing resource.

We mean by data on the external workload, data concerning the user requested workload or application. Example of data on the workload are number of requested core or the execution time or the overall runtime comprising the time spent in the queue before accessing the computing resource.

We mean by workload placement, a possible way of distributing the user-requested task across the computing resource. Due to the parallel nature of the workload, the number of ways of distributing the workload across different cores or nodes in the computing resource can be very high.

We mean by utility function, a mathematical tool adapted to model a trade-off scenario, in the case of the invention it is a trade-off between the user utility and the provider utility. A utility function can be based on a mathematical model or a statistical model or a machine learning model. Computing a utility function means obtaining a utility value.

We mean by utility criterium, a criterium defining a selected trade-off between the user utility and the provider utility. The utility criterium can be a mathematical condition based on values of the computed user and provider utility functions. The utility criterium can comprise the definition of an interval of utility values for both the user and the provider. A workload placement must then fulfill the utility criterium in order to be selected.

An advantage of the invention is the possibility of determining the placement of a workload across a heterogeneous computing resource by taking on account both the user and the provider utility. An advantage of the method according to the invention is the capability of placing a parallel workload, dealing with a high number of possible placements across the computing resource.

Thanks to the use of the utility function tools, it is possible to compute different trade-off scenarios and to choose a workload placement fulfilling a predetermined utility criterium based on user and provider utility values.

Thanks to the method according to the invention, various influencing parameters are treated as attributes and it is possible to propose a unified perspective by using the Multi-Attribute Utility Theory (MAUT), considering both the context of the service provider and the customer.

An advantage of the method according to the invention is to add value to HPC in cloud by combining the capabilities of HPC and cloud resource managing (RM) for decision actuation.

For instance, the method according to the invention accounts for various influencing parameters determining the workload placement. These parameters are Parallelism in the application, Heterogeneity in the cluster, Isolation required to achieve quality of service and Granularity of the requested service.

Parallelism in the application means the scalability of the application to multiple nodes in the cluster. This scalability depends on the underlying hardware architecture and the way the application is programmed to make use of it.

The method according to the invention can account for Isolation. HPC application requires complete resources for themselves. For example, when a node is allocated to an application, it takes up the entire cluster even if the application demands only 50% of the resource in that node. This is basically because existing RM does not have the facility to give 50% to 2 different application and guarantee the performance.

The method according to the invention can account for Granularity. Applications can be run in the hardware directly or on the lightweight container or using Virtual Machines. Traditional RMs work only in baremetal mode i.e. in the hardware directly where managing the application intelligently is difficult.

The method according to the invention may also include the following optional steps considered individually or according to all possible combination of techniques:

- the step of computing a set of utility functions further comprise computing a set of utility functions based on a set of resource related attributes;

- computing a set of utility functions based on a set of resource related attributes comprises computing a utility function dependent on user segmentation and/or total cost of ownership of the resource;

- the step of computing a set of utility functions further comprises computing a set of utility functions based on a set of a workload related attributes;

- computing a set of utility functions based on a set of a workload related attributes comprises computing a utility function dependent on the workload execution time and/or the workload queuing time.

- the computing resource is a high-performance computing unit;

- the step of receiving a workload comprises receiving a parallel workload;

- the step of receiving a workload comprises receiving multiple workloads from different users;

- it further comprises a step of determining the utility criterium based on the values of a resource related utility function and/or a user related utility function.

## Brief description of the drawings

Other characteristics and advantages of the invention will be apparent in the following description, by way of indication and in no way limiting, and referring to the annexed figures among which:

[Fig. 1] Figure 1 is a schematic view of the method according to the invention;

[Fig. 2] Figure 2 shows three possible placements of a user workload requesting ten cores over a computing resource hosting three nodes;

[Fig. 3] Figure 3 represents a graph showing the number of possible placements of a workload as a function of the number of the requested cores;

[Fig. 4] Figure 4 represents the utility chart for the case of 109 possible placements of Figure 3, displaying the possible placements as a function of user and provider utility.

## Detailed description

First, it is noted that on the figures, the same references designate the same elements regardless of the figures on which they feature and regardless of the form of these elements. Similarly, should elements not be specifically referenced on one of the figures, their references may be easily found by referring oneself to another figure.

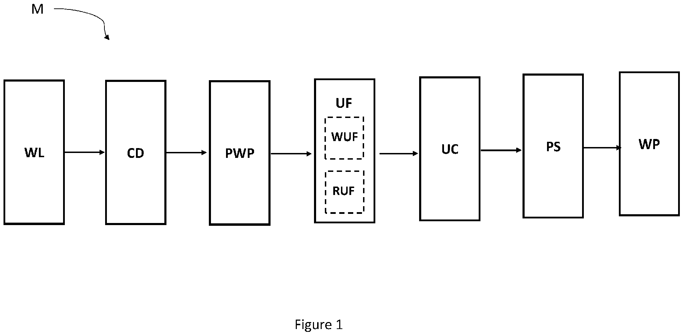

Figure 1 show a sketch of the method M according to the invention.

The method M according to the invention comprises a first step WL of receiving a workload from an external user.

According to an embodiment of the invention, the received workload is a parallel workload. According to another embodiment of the invention, the step WL comprises receiving a multiplicity of workloads from one or several different external users. The multiple workloads can be received simultaneously or sequentially.

Advantageously, the method M according to the invention allows the placement of a parallel workload based on a trade-off between the user and the provider needs, even in presence of a heterogeneous computing resource.

The method M according to the invention comprises a step CD of collecting data regarding the workload and the computing resources. Examples of data related to the computing resources are the structure of the resources such as the number of available cores or their characteristics and performances. Examples of workload related data are the number of cores requested, the type of user or the segment to which the user belongs, the expected execution time or the expected runtime.

Data collected at the step CD are then used to compute all possible placements of the workload across the computing resource at step PWP. Based on the complexity of the workload and on the complexity of the computing resources the number of possible placements can be as high as several thousands.

The step UF comprises computing of a set of utility functions for each of the possible workload placement computed at the step PWP. In this context, computing a utility function means obtaining a utility value dependent on a set of attributes.

Advantageously, the fact of computing at least a utility function for each of the possible workload placement allows comparison between all the possible decision, enabling insight driven placement decisions.

According to an embodiment, the set of utility functions may comprise one or more utility functions.

According to an embodiment, the step UF comprises computing a set of utility functions based on resource related attributes RUF and computing a set of utility functions based on workload related attributes WUF.

An advantage of considering resource related attributes and workload related attributes in computing utility functions resides in accounting for the trade-off between user utility and provider utility.

According to an embodiment, the utility functions are multi-attribute utility functions that can be computed through the Multi Attribute Utility Theory (MAUT).

Advantageously MAUT allows the computing of a trade-off between customer and provider interest for job placement.

Utility functions can be computed according to mathematical, statistical or machine learning model.

According to an embodiment, the step of computing resource related utility functions RUF comprises computing utility functions dependent on provider related attributes such total cost of ownership TCO or user segmentation.

According to an embodiment, the TCO can be related to the provider profit P. The provider profit P can be modelled as the difference between the Revenue and the Expenditure in managing the computing resource. Revenue may be dependent on the computing power, network and storage infrastructure that has been requested. Expenditure may be dependent on infrastructure maintenance and power consumption.

According to an embodiment the TCO comprises the amount of computing resources needed in the provider's computing facility and/or the power consumption of the facility. Reducing the TCO is then equivalent to reducing the amount of resources needed in the facility and the facility power consumption.

The user segmentation is the attribute allowing the provider to differentiate the computing resource users based on the kind of job requested or any other user profile feature. User segmentation can be accounted for by a compliance factor attribute that can be used to penalize the placement decision of the workload such that the job that has higher utility across multiple queue will be executed.

According to an embodiment, the step of computing workload related utility functions comprises computing utility functions dependent on workload related attributes such as execution time or queuing time.

Execution time attribute captures and predicts the performance or application scalability characteristics across the heterogeneous nodes in the system. According to an embodiment, the execution time can be modelled based on machine learning techniques such as clustering or classification techniques.

The total runtime of an application depends on how long it waits in the queue before it gets executed.

After having computed the utility functions for all the possible workload placement, the method M according to the invention comprises a step of selecting the workload placement PS.

The selection of the workload placement is done according to a utility criterium, representing the required trade-off between the provider and the user utility. We mean by utility criterium a criterium defining a selected trade-off between the user utility and the provider utility. The utility criterium can be a mathematical condition based on values of the computed user and provider utility functions. According to an embodiment, utility values are in the range comprised between -1 and 1. A user utility value of -1 means the worst condition for the user, for example the longest runtime possible. A user utility value of +1 means the best condition for the user, for example the shortest runtime possible.

According to an embodiment, the method M can further comprise a step UC of computing the utility criterium based to the user and provider utility functions.

The method M according to the invention further comprises a step of executing the selected workload placement WP.

An example of utility function based on a set of resource relate attributes is the following:

$$\mathcal{U}_p = (\alpha_1 * U(P) + \beta_1) * (\alpha_2 * U(C) + \beta_2)$$

In which $U_p$ is the resource or provider related utility value, U(P) is profit dependent utility function and U(C) is the user segmentation utility function.

An example of utility function based on a set of workload related attributes is the following:

$$\mathcal{U}_c = (\alpha_3 * U(T_e) + \beta_3) * (\alpha_4 * U(T_r) + \beta_4)$$

In which Uc is the workload or user or customer related utility value, $U(T_e)$ is the execution time dependent utility function and $U(T_r)$ is the runtime dependent utility function. The parameters $\alpha$ and $\beta$ are the weights of each attributes. They can be tuned according to the specific embodiment of the method M.

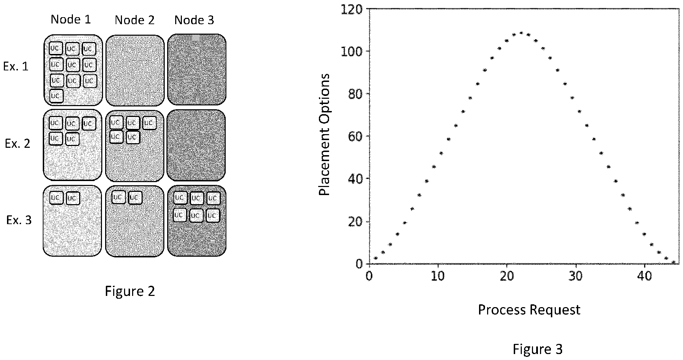

Figure 2 shows three examples of how a workload requiring 10 cores can be distributed across a computing resource comprising three nodes. It is worth noting that the computing resource can be heterogeneous with the three nodes possessing different technical features. Each row in figure three represents a possible placement of the workload. Each column represents one of the three available nodes in the computing resource. The cores used in each node are marked as UC, used core.

Figure 3 is also referred to a heterogeneous structure comprising three nodes with respectively 16, 20 and 6 cores. Each core has a different computational strength, contributing to the heterogeneity of the computing resource. In the example of figure 3 the incoming workload requires 20 processes and it is considered that all the 42 cores in the clusters are available. The graph represents the number of possible placements as a function of the number of requested cores. In this case there are 116 possible combinations the 20 process can be distributed across 42 cores in 3 nodes. An Example of the possible combination is: 0 cores from the first node, 20 cores from the second node and 0 codes from the third node; Another example of possible combination is 1 core from the first node, 1 core from the second node and 18 cores from the third node.

By applying the method M to the case of figure 3 it is possible to select and realize the workload placement satisfying a given trade-off between user utility and provider utility.

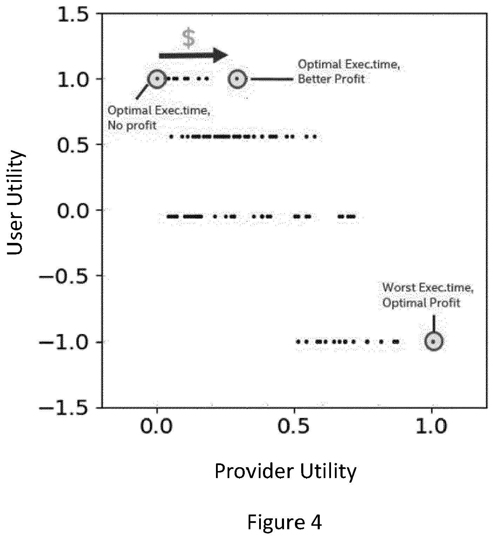

Figure 4 shows a utility chart for a workload requesting 24 cores across three heterogeneous nodes with 42 cores available. The 109 possible placements are plotted as a function of the Provider Utility, represented on the horizontal axis, and of the User Utility, represented on the vertical axis. The utility charts of figure 4 is the typical output of the step UF if computing a set of utility functions for all the possible workload placements. The choice of the utility criterium can be done based on the value of the utility chart represented in figure 4.

The point in the far top left of figure 4 has User Utility = 1 and Provider Utility = 0, which means that this placement is fully favourable to the user and not satisfying for the provider.

The point in the bottom right of figure 4 has User Utility = 0 and Provider Utility = 1 which means that the placement option can be fully favourable for the provider but may or may not be satisfying for the provider.

Choosing the utility values to obtain a certain user/provider trade-off means determining the utility criterium used to select the optimal placement.

The important observation here is that for the same User Utility there can be multiple Provider Utility, which gives a proper trade-off between customer and provider necessities. The optimal trade-off placement decision or this example will be to choose the top right point which will have User Utility = 1 and Provider Utility = 0.4 where the provider can ensure that he is offering best customer utility by maximizing the provider utility. These values of User Utility and Provider Utility represent the utility criterium in this example.

**Claims**

1. Method (M) for placing a workload in a computing resource comprising the following steps:

   • Receiving a workload (WL) from a user;
   • Collecting data (CD) on the computing resource and the workload;
   • Based on the collected data, computing potential workload placements (WPL);
   • Based on the collected data and the computed potential workload placements, computing a set of utility functions for each potential workload placement (UF);
   • Based on the computed set of utility functions, determine the workload placement fulfilling a utility criterium (PS);
   • Placing the workload (WP) on the basis of the determined workload placement.

**2.** Method according to claim 1 **characterized in that** the step of computing a set of utility functions (UF) further comprise computing a set of utility functions based on a set of resource related attributes (RUF).

**3.** Method according to the previous claim **characterized in that** computing a set of utility functions based on a set of resource related attributes (RUF) comprises computing a utility function dependent on user segmentation and/or total cost of ownership of the resource.

**4.** Method according to one of the previous claims **characterized in that** the step of computing a set of utility functions (UF) further comprises computing a set of utility functions based on a set of a workload related attributes (WUF).

**5.** Method according to the previous claim **characterized in that** computing a set of utility functions based on a set of a workload related attributes (WUF) comprises computing a utility function dependent on the workload execution time and/or the workload queuing time.

**6.** Method according to one of the previous claims **characterized in that** the computing resource is a high-performance computing unit.

**7.** Method according to one of the previous claims **characterized in that** the step of receiving a workload (WL) comprises receiving a parallel workload.

**8.** Method according to one of the previous claims **characterized in that** the step of receiving a workload (WL) comprises receiving multiple workloads from different users.

**9.** Method according to one of the previous claims **characterized in that** it further comprises a step of determining the utility criterium (UC) based on the values of a resource related utility function and/or a user related utility function.

M

| WL | → | CD | → | PWP | → | UF<br><br>WUF<br><br>RUF | → | UC | → | PS | → | WP |

Figure 1

Figure 2

Figure 3

Figure 4

Europäisches
Patentamt

European
Patent Office

Office européen
des brevets

# EUROPEAN SEARCH REPORT

Application Number

EP 20 18 1682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 447 806 B1 (SAHAY MANJUL [US] ET AL) 15 October 2019 (2019-10-15) * column 5, line 29 - column 17, line 10; figures 1-6A * ----- | 1-9 | INV. G06F9/50 |
| X | US 2018/152390 A1 (LOOMBA RADHIKA [IL] ET AL) 31 May 2018 (2018-05-31) * paragraphs [0027] - [0094] * ----- | 1-9 | |
| X | US 2019/045374 A1 (LOOMBA RADHIKA [IE] ET AL) 7 February 2019 (2019-02-07) * paragraphs [0050] - [0082], [0156]; figures 3-6 * ----- | 1-9 | |

TECHNICAL FIELDS
SEARCHED        (IPC)

G06F

The present search report has been drawn up for all claims

| Place of search | Date of completion of the search | Examiner |
|---|---|---|
| The Hague | 12 November 2020 | Nourestani, S |

## ANNEX TO THE EUROPEAN SEARCH REPORT
## ON EUROPEAN PATENT APPLICATION NO.

EP 20 18 1682

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2020

| Patent document cited in search report | | Publication date | Patent family member(s) | Publication date |
|---|---|---|---|---|
| US 10447806 | B1 | 15-10-2019 | NONE | |
| US 2018152390 | A1 | 31-05-2018 | NONE | |
| US 2019045374 | A1 | 07-02-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. TANG et al.** Job scheduling with adjusted runtime estimates on production supercomputers. *Journal of Parallel and Distributed Computing,* 2013, vol. 73

- **K. WANG et al.** Optimizing load balancing and data-locality with data-aware scheduling. *IEEE International Conference on Big Data,* 2014